Europäisches Patentamt

European Patent Office

Office européen des brevets

(19)

(11) Publication number: **0 204 508 B1**

(12) **EUROPEAN PATENT SPECIFICATION**

(45) Date of publication of patent specification: **15.07.92**

(51) Int. Cl.⁵: **G05D 23/19, H03K 4/50**

(21) Application number: **86304065.5**

(22) Date of filing: **28.05.86**

(54) **Interface for voltage ramp programmers.**

(30) Priority: **28.05.85 IT 2091585**

(43) Date of publication of application:
**10.12.86 Bulletin 86/50**

(45) Publication of the grant of the patent:
**15.07.92 Bulletin 92/29**

(84) Designated Contracting States:
**BE CH DE FR GB LI NL**

(56) References cited:
**US-A- 3 201 611**
**US-A- 3 311 303**
**US-A- 3 970 774**

**RADIO FERNSEHEN ELEKTRONIK, vol. 30, no. 7, July 1981, pages 452-454, Berlin, DE; C. KÜHNEL: "Dimensionierung von Addier-Subtrahierschaltungen mit Operationsver-stärkern"**

(73) Proprietor: **Montedison S.p.A.**
**31, Foro Buonaparte**
**I-20121 Milan(IT)**

Proprietor: **CONSIGLIO NAZIONALE DELLE RICERCHE**
**Piazzale Aldo Moro, 7**
**I-00198 Roma(IT)**

(72) Inventor: **Mattera, Adriano**
**13, via Tadini**
**I-28100 Novara(IT)**
Inventor: **Fornari, Roberto**
**9, via Bachelet**
**I-43100 Parma(IT)**
Inventor: **Magnanini, Renato**
**64, via Iatti**
**I-42045 Luzzara Reggio Emilia(IT)**
Inventor: **Paorici, Carlo**
**36, via Zarotto**
**I-43100 Parma(IT)**
Inventor: **Zanotti, Lucio**
**8, via Silvio Pellico**
**I-43100 Parma(IT)**
Inventor: **Zuccalli, Giovanni**
**3, via Paullo**
**I-43100 Parma(IT)**

(74) Representative: **Whalley, Kevin et al**
**MARKS & CLERK 57/60 Lincoln's Inn Fields**
**London WC2A 3LS(GB)**

**Description**

The present invention relates to an interface for voltage ramp programmers, suitable to be used in commercial voltage change programmers to obtain output signal variations of a few mV.

In particular the invention relates to an interface between a voltage ramp programmer (generator) and a temperature controller to obtain temperature variations of a few tenths of a degree centigrade.

One limitation of common commercial programmers is due to their high programmable minimum voltage increase which is greater than 1 mV, generally some 10-20 mV. Minimum voltage increases that are so high constitute a drawback in ovens where it is necessary to have a temperature control of some tenths of a degree centigrade.

In fact, for certain applications a temperature variation of even less than 1°C is required, down to values of approximately 0.1°C, or even less. Such temperature variations correspond to minimum voltage increases of the voltage ramp generators of some 1 mV, or even less.

A commercial voltage programmer normally used, for example, is the Honeywell DCP 7700. Analogous programmers are available from Messrs. Leeds and Northrup, Eurothron and others.

The Honeywell voltage ramp generator has the following characteristics: voltage outputs on 3 independent channels, possibility of programming 99 temperature segments or settings, storing of 9 programmes. The nine programmes serve to pass from an initial predetermined voltage value to a final value, passing through intermediate values in established periods of time that are more or less prolonged.

These commercial programmers, that have voltage variations of about 10-20 mV, have the above mentioned drawbacks, since the minimum programmable temperature variation varies approximately from 1° to 2°C.

In particular, these temperature variations in the growth of semiconductor type, insulating or metallic single crystals generate a high number of lattice defects.

These defects make the single crystals obtained rather unsuitable for various applications, in particular for those in the electronic field, such as emitter diodes, micro-wave devices, lasers, integrated circuits and others. The group III-V single crystals, such as for example GaP and InP, have a high dislocation density and often a high concentration of impurities. The above mentioned group III-V monocrystals are not stoichiometric and have a low structural homogeneity. In fact, inclusions, micro-precipitates, etc. are present.

This represents a significant drawback when the single crystals are prepared by using a polycrystal as a precursor. In this case the single crystals will have a high number of dislocations and impurities.

The oven generally used in the growth of single crystals is the CZ type (Czochralski) and growth occurs using the LEC technique (liquid encapsulation technique).

Horizontal Bridgman type ovens may also be used.

Another drawback encountered is that the high concentration of defects is also associated with a concentration of contaminating impurities since these in turn generally contribute to the formation of lattice defects during the growth and cooling of the single crystal.

Therefore, there is a need for special programmers, capable of programming voltage variations of about 1 mV, or less, so that the single crystals obtained would have a high perfection and purity. In fact, in some stages of the growth cycle, it would be necessary to have temperature variations even of about 0.1 degrees centigrade, or less, to obtain single crystals with the high properties mentioned above.

Unexpectedly, it has been found that it is possible to obtain output voltage variations even down to values of 1 mV, or less, in commercial programmers if an interface according to the present invention is used.

The present invention provides an interface between a voltage ramp programmer (or generator), having two output voltage ($V_2$ and $V_3$) channels CH2 and CH3, variable between a minimum and a maximum and increasable by minimum values greater than 1 mV, and a temperature controller, including a summing amplifier having three input voltages, $V_1$, $V_2$, $V_3$, wherein $V_2$ and $V_3$ are the output voltages from the programmer and $V_1$ is a negative voltage inserted as defined hereinafter, having as output voltage $V_{out}$, with minimum voltage increases less than or equal to 1 mV, defined by the equation:

$$V_{out} = V_3 + \frac{V_2}{Y} + V_1 \qquad (1)$$

wherein y is an attenuation factor as defined hereinafter, the said $V_{out}$ being obtained:
by attenuating the minimum output voltage variation from the channel CH2 of the programmer by an

EP 0 204 508 B1

attenuation factor y equal to or greater than the said minimum variation of channel CH2,
by adding the output voltage from the channel CH3 of the programmer, left unchanged, to the attenuated voltage of channel CH2 and
by subtracting a voltage $V_1$, equal to the maximum output value of channel CH2, from the total output of channel CH2.

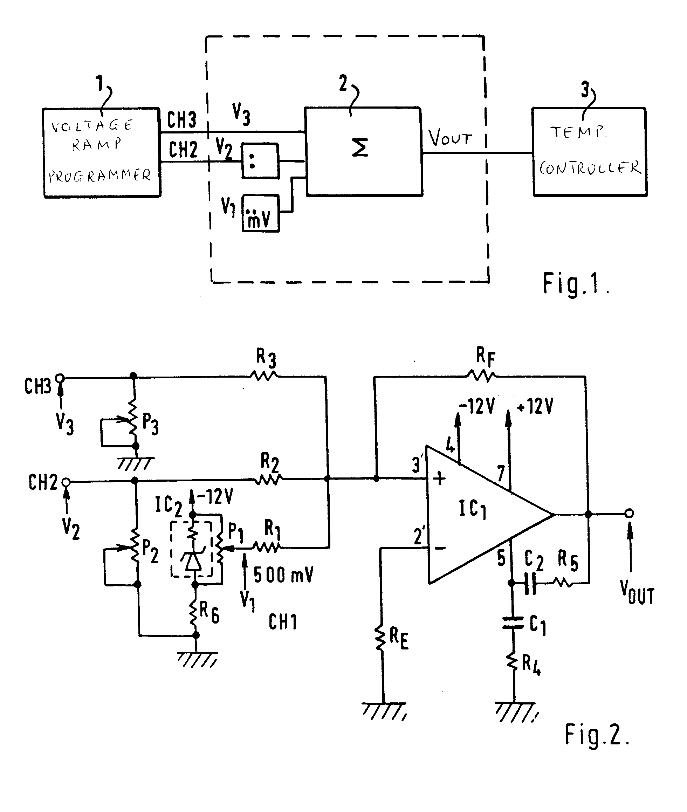

Such an interface (2) between a voltage ramp programmer 1 and a temperature controller 3 is shown schematically in Figure 1 of the accompanying drawings.

In particular, the interface preferably includes a summing amplifier obtained with an integrated circuit $\mu$A 725, as shown in Figure 2 of the accompanying drawings, having an output voltage $V_{out}$ defined by the equation:

$$V_{out} = \frac{V_3}{x} + \frac{V_2}{y} + \frac{V_1}{z} \qquad (2)$$

wherein x and z are the attenuation or amplification values of $V_3$ and $V_1$, also taking the value 1, and y always being equal to or greater than the minimum output voltage variation from channel CH2 of the programmer, the values of $V_1$, $V_2$, and $V_3$ being defined as follows:

1) $V_1$ is a negative voltage, stabilized by a Zener diode, necessary to maintain an output signal that fully compensates the output signal from channel CH2 of the programmer and the intrinsic output signal of the amplifier; the said voltage $V_1$ may also be attenuated or amplified by a factor z as a function of the reciprocal of two resistances $R_1$ and $R_F$;

(2) $V_2$ is the output voltage supplied by the programmer at channel CH2, variable between a minimum and a maximum value with minimum increases greater than 1 mV, the said voltage $V_2$ being attenuated by a factor y, as a function of the reciprocal of two resistances $R_2$ and $R_F$ and with minimum increases, between the extreme attenuated values of the variation range of $V_2$, less than or equal to 1 mV.

(3) $V_3$ is the output voltage of the second channel CH3 of the programmer, variable between a minimum and a maximum with minimum increases greater than 1 mV; the said voltage $V_3$ being attenuated or amplified by a factor z, as a function of the reciprocal between $R_3$ and $R_F$;

the values $V_1$ and $V_3$ however being suitable amplified or attenuated, or left unvaried, and $V_2$ being always attenuated with the condition that x, y, z are such as to lead to $V_{out}$ having minimum increases being less than or equal to 1 mV, as a function of the combination of the reciprocals of the resistances indicated in 1), 2) and 3), the resistance $R_F$ being connected between the output and an input (3') of the summing amplifier and the resistances $R_1$, $R_2$, $R_3$ being connected respectively between the input voltage $V_1$, $V_2$, $V_3$ and said input (3') of the summing amplifier.

An example is provided of a particular application of the interface in the growth and synthesis of single crystals with a CZ ADL oven mod. HPCZ and with a Honeywell DCP 7700 programmer and CAT series 80 temperature controller to illustrate the values that may be assumed by $V_1$, $V_2$, $V_3$ indicated above, to obtain output voltages $V_{out}$ with increases equal to 1 mV.

In this particular case the values of the input voltages of the summing amplifier are:

1) $V_1$ = approximately -500 mV stabilized by a Zener diode, necessary to maintain an output signal that fully compensates a 500 mV signal provided by the CH2 of the programmer, as specified in 2) hereinbelow, and the intrinsic output signal of the amplifier; the amplifier gain z for the voltage is unity, since the resistances $R_1 = R_F$ (z = 1);

2) $V_2$ output voltage supplied by the programmer on the channel CH2, is variable between 1 V and 5 V with minimum increases of 10 mV; since $R_2 = R_F.10$, this voltage is attenuated by the amplifier by a factor 10 (y = 10) and contributes to output voltage variations lying between 100 mV and 500 mV with minimum increases of 1 mV;

3) $V_3$ output voltage of the second channel CH3 of the programmer, is variable between 1 V and 5 V with minimum increases of 10 mV; since $R_3 = R_F$, the amplifier gain is unity (x = 1).

In particular, when the channel CH2 output of the programmer is kept fixed at 5 V the total contribution of $V_1$ and $V_2$ on the output voltage is zero. In this way it is possible to obtain an output voltage that is variable between 0 and -400 mV, with decreases of 1 mV. This is found to be ideal for the growth phase of a single crystal, since in this way it is possible to adopt controlled temperature drops in the oven from approximately 0.1°C to 40°C, with minimum variations even of approximately 0.1°C.

Voltage programming on channel CH3 is used in all the processing phases where minimum values greater than 10 mV are required.

For example, this is encountered in the synthesis phases of a polycrystal starting from the elements for

3

EP 0 204 508 B1

semiconductors obtained with the LEC technique.

In practice, in this particular case the interface performs the following functions:

- attenuates 10 times (divides by 10) the minimum output voltage variation of channel 2 (CH2) bringing it to the value of 1 mV.
- adds the output voltages of channel 3 (CH3), left unchanged, to the compressed voltage of channel 2,
- subtracts 500 mV from the total output of channel 2 to programme negative voltage values on CH2, which operates between 0.1-0.5 V, bringing the operating range of CH2 to between 0 and -0.4 V.

In practice, in this particular case the interface connects two programmer channels to the temperature controller, with a total output voltage controlled by the following expression:

$$V_{out} = V_3 + V_2/10 - 500$$

wherein $V_{out}$ is the total output voltage from the summing amplifier, and $V_2$ and $V_3$ are the output voltages of channels 2 and 3 of the programmer.

The interface in the particular case indicated is described in detail in the electronic diagram shown in Figure 2 of the drawings.

CH1, CH2, CH3 are the output channels of the commercial programmer used:

$R_1$, $R_2$, $R_3$, $R_4$, $R_5$, $R_6$, $R_E$, $R_F$ are resistances;

$C_1$, $C_2$ are capacitors;

$P_1$, $P_2$, $P_3$ are variable resistances (potentiometers) for which the maximum value is indicated;

$IC_1$ is a summing amplifier;

$IC_2$ is an integrated circuit, including a Zener diode and resistance.

The values of the various components are given below for the particular example considered above.

$R_1 = R_3 = R_F = 10 \text{ K } \Omega$,

$R_2 = 100 \text{ K } \Omega$,

$R_E = 3.9 \text{ K } \Omega$,

$R_4 = 10 \text{ } \Omega$,

$R_5 = 39 \text{ } \Omega$,

$P_3 = P_2 = 500 \text{ } \Omega$,

$P_1 = 10 \text{ K } \Omega$,

$R_6 = 12 \text{ K } \Omega$,

$C_1 = 0.05 \text{ } \mu \text{ F}$,

$C_2 = 0.02 \text{ } \mu \text{ F}$.

In particular, an integrated circuit $\mu$ A 725, National make, is used as the summing amplifier $IC_1$.

Figure 1 is a block diagram of the interface 2 between the programmer 1 and the temperature controller 3, where it is apparent that the interface has no effect on the channel CH3 of the programmer, whereas it does have an effect on the channel CH2 which is divided by a factor y = 10, and on channel CH1 the fixed applied signal of -500 mV is indicated, by referring to the particular case described.

It is to be understood that, on the basis of the data of the particular case described above, a skilled person is capable of attenuating or amplifying the voltage values $V_1$ and $V_3$, and determining the attenuation of $V_2$ as a function of the minimum output increases from the programmers on the channel CH2, to obtain increases in $V_{out}$ that are less than or equal to 1 mV as a function of the different applicative requirements.

The invention will he further described with reference to the following illustrative Examples.

Example 1

A 500 g polycrystal of commercial InP was taken and melted in a CZ ADL type oven, mod. HPCZ at 1100°C. Voltage variations were then applied to a Honeywell DCP 7700 programmer after insertion of an interface of this invention between the programmer itself and a CAT Series 80 temperature regulator as in Figure 1, and the values of the components of the interface being those indicated above for the particular case described.

It was observed that for output voltage variations of 1 mV there was a corresponding melt temperature variation of approximately 0.1°C, this temperature having been measured using precision thermocouples for high temperatures of the Platinum/Platinum-Rhodium type (13%).

Comparative Example 1

Example 1 was repeated under the same conditions, but without using the interface of this invention.

4

In correspondence with the minimum increase of 10 mV of the output voltage value, minimum temperature variation of 1°C was observed.

## Claims

1. Interface (2) between a voltage ramp programmer (1), having at least two channels (CH2 and CH3) of output voltages $V_2$ and $V_3$, variable between a minimum and a maximum and increasable by minimum values greater than 1 mV, and a temperature controller (3), characterized in that it comprises a summing amplifier (IC1) having three input voltages $V_1$, $V_2$, $V_3$, wherein $V_2$ and $V_3$ are the output voltages from the programmer (1) and $V_1$ is a negative voltage inserted as defined hereinafter, and an output voltage $V_{out}$, having minimum voltage increases less than or equal to 1 mV, defined by the equation:

$$V_{out} = V_3 + \frac{V_2}{y} + V_1 \qquad (1)$$

wherein y is an attenuation factor as defined hereinafter, the said $V_{out}$ being obtained:
by attenuating the minimum variation of output voltage $V_2$ from the first channel (CH2) of the programmer by an attenuation factor y equal to or greater than the said minimum variation of the first channel (CH2),
by adding the output voltage V3 from the second channel (CH3) of the programmer, left unchanged, to the attenuated voltage of the first channel (CH2), and
by subtracting a voltage $V_1$, equal to the maximum output value of the first channel (CH2), from the total output of the first channel (CH2).

2. An Interface as claimed in claim 1, characterized in that the summing amplifier (IC1) is obtained with an integrated circuit ($\mu$ A 725) and has an output voltage defined by the equation:

$$V_{out} = \frac{V_3}{x} + \frac{V_2}{y} + \frac{V_1}{z} \qquad (2)$$

wherein x and z are the amplification or attenuation values of $V_3$ and $V_1$, also taking the value of 1, y always being equal to or greater than the minimum variation of the output voltage from the first channel (CH2) of the programmer, the values $V_1$, $V_2$, $V_3$ being defined as follows:
1) $V_1$ is a negative voltage, stabilized by a Zener diode, necessary to maintain an output signal that fully compensates the output signal from the first channel (CH2) of the programmer and the intrinsic output signal of the amplifier; the said voltage $V_1$ may also be attenuated or amplified by a factor z as a function of the reciprocal of two resistances $R_1$ and $R_F$;
2) $V_2$ is output voltage provided by the programmer on the first channel (CH2), being variable between a minimum value and a maximum value with minimum increases greater than 1 mV, the said voltage $V_2$ being attenuated by a factor y, as a function of the reciprocal of two resistances $R_2$ and $R_F$ and with minimum increases, between the extreme attenuated values of the variation range of $V_2$, less than or equal to 1 mV;
3) $V_3$ is output voltage of the second channel (CH3) of the programmer, variable between a minimum and a maximum with minimum increases greater than 1 mV; the said voltage $V_3$ may also be attenuated or amplified by a factor z, as a function of the reciprocal of two resistances $R_3$ and $R_F$; the values $V_1$ and $V_3$ being suitably amplified or attenuated or left unchanged, and $V_2$ being always attenuated at the condition that x, y, z are such as to lead to $V_{out}$ having minimum increases less than or equal to 1 mV, the resistance $R_F$ being connected between the output and an an input (3') of the summing amplifier (IC1) and the resistances $R_1$, $R_2$, $R_3$ being connected respectively between the input voltage $V_1$, $V_2$, $V_3$ and said input (3') of the summing amplifier (IC1).

3. Interface as claimed in claim 2, characterized in that the output channels (CH2 and CH3) from the programmer (1) supply voltages $V_2$, $V_3$ with minimum increases of 10 mV, and in that $V_1$, $V_2$ and $V_3$ take the following values to obtain output voltages $V_{out}$ with minimum increases of 1 mV:
1) $V_1$ = approximately -500 mV, stabilized by a Zener diode, necessary to maintain an output signal that entirely compensates a 500 mV signal supplied by the first channel (CH2) of the programmer, as defined in 2) hereinbelow, and the intrinsic output signal of the amplifier, the amplifier gain z on this voltage being unity since the resistances $R_1$ = $R_F$;

2) $V_2$ output voltage supplied by the programmer on the first channel (CH2), variable between IV and 5V with minimum increases of 10 mV; since $R_2$ = $R_F$.10, this voltage is attenuated by the amplifier by a factor y = 10 and contributes to output voltage variations from 100 mV to 500 mV with minimum increases of 1 mV;

3) $V_3$ output voltage of the second channel (CH3) of the programmer, variable between IV and 5V with minimum increases of 10 mV; since $R_3$ = $R_F$, the amplifier gain x is unity.

4. Use of an interface as claimed in any of claims 1 to 3, for the growth and cooling phases of single crystals and for the synthesis of composite polycrystals starting from the crystal elements.

**Revendications**

1. Interface (2) entre un programmateur (1) à rampe de tension ayant au moins deux canaux (CH2 et CH3) de tensions de sortie $V_2$ et $V_3$, variant entre une valeur minimale et une valeur maximale et susceptibles d'augmenter au minimum d'une valeur supérieure à 1 mV, et un contrôleur de température (3), caractérisée en ce qu'elle comprend un amplificateur sommateur (IC1) ayant trois tensions d'entrée $V_1$, $V_2$, $V_3$, où $V_2$ et $V_3$ sont les tensions de sortie du programmateur (1) et $V_1$ est une tension négative insérée définie dans ce qui suit, et ayant une tension de sortie $V_{out}$, présentant des augmentations minimales de tension inférieures ou égales à 1 mV, définie par l'équation:

$$V_{out} = V_3 + V_2/y + V_1 \qquad (1)$$

dans laquelle:

y     est un facteur d'atténuation défini ci-dessous, ladite $V_{out}$ étant obtenue par:
- atténuation de la variation minimale de la tension de sortie $V_2$ du premier canal (CH2) du programmateur par un facteur d'atténuation y supérieur ou égal à ladite variation minimale du premier canal (CH2),
- addition de la tension de sortie $V_3$ du deuxième canal (CH3) du programmateur, sans changement, à la tension atténuée du premier canal (CH2), et
- soustraction d'une tension $V_1$, égale à la valeur maximale de sortie du premier canal (CH2), au signal total de sortie du premier canal (CH2).

2. Interface selon la revendication 1, caractérisée en ce que l'amplificateur sommateur (IC1) est réalisé par un circuit intégré ($\mu$ A 725) et a une tension de sortie définie par l'équation:

$$V_{out} = V_3/x + V_2/y + V_1/z \qquad (2)$$

dans laquelle:

x et z     sont les valeurs d'atténuation ou d'amplification de $V_3$ et $V_1$, ces valeurs pouvant également être égales à 1, et

y     étant toujours supérieur ou égal à la variation minimale de la tension de sortie du premier canal (CH2) du programmateur, les valeurs de $V_1$, $V_2$ et $V_3$ étant définies de la façon suivante:

1) $V_1$ est une tension négative stabilisée par une diode Zener, nécessaire pour maintenir un signal de sortie qui réalise une compensation totale du signal de sortie du premier canal (CH2) du programmateur et du signal intrinsèque de sortie de l'amplificateur; ladite tension $V_1$ peut également être atténuée ou amplifiée par un facteur z en fonction de la valeur relative de deux résistances $R_1$ et $R_F$;

2) $V_2$ est la tension de sortie fournie par le programmateur sur le premier canal (CH2), variant entre une valeur minimale et une valeur maximale ayant un incrément minimal supérieur à 1 mV, ladite tension $V_2$ étant atténuée par un facteur y fonction de la valeur relative de deux résistances $R_2$ et $R_F$ et avec des augmentations minimales, entre les valeurs atténuées extrêmes de la gamme de variation de $V_2$, inférieures ou égales à 1 mV;

3) $V_3$ est la tension de sortie du deuxième canal (CH3) du programmateur, variant entre une valeur minimale et une valeur maximale avec un incrément minimal supérieur à 1 mV; ladite tension $V_3$

étant atténuée ou amplifiée par un facteur z, fonction de la valeur relative de $R_3$ et $R_F$,

les valeurs $V_1$ et $V_3$ étant, cependant de façon appropriée, amplifiées, atténuées ou laissées sans changement, et $V_2$ étant toujours atténué sous la condition que x, y, z sont tels qu'est obtenue une augmentation minimale de $V_{out}$ inférieure ou égale à 1 mV, la résistance $R_F$ étant branchée entre la sortie et une entrée (3') de l'amplificateur sommateur et les résistances $R_1$, $R_2$ et $R_3$ étant branchées, respectivement, entre les tensions d'entrée $V_1$, $V_2$, $V_3$, et ladite entrée (3') de l'amplificateur sommateur (IC1).

**3.** Interface selon la revendication 2, caractérisée en ce que les canaux de sortie (CH2 et CH3) du programmateur (1) fournissent des tensions ($V_2$, $V_3$) ayant des incréments minimaux de 10 mV, et ce que $V_1$, $V_2$ et $V_3$ prennent les valeurs suivantes afin d'obtenir des tensions de sortie $V_{out}$ ayant des incréments minimaux d'augmentation de 1 mV:

1) $V_1$ = approximativement -500mV stabilisé par une diode Zener, nécessaire pour maintenir un signal de sortie qui réalise une compensation totale d'un signal de 500 mV fourni par le premier canal (CH2) du programmateur, comme spécifié en 2) ci-dessous, et du signal intrinsèque de sortie de l'amplificateur; le gain z de l'amplificateur en ce qui concerne la tension, est unitaire puisque la résistance $R_1$ = $R_F$;

2) $V_2$ = tension de sortie fournie par le programmateur sur le canal premier canal (CH2), variable entre 1 V et 5 V avec des incréments minimaux de 10 mV; puisque $R_2$ = RF.10, cette tension est atténuée par l'amplificateur d'un facteur de 10 et contribue à des variations de tension de sortie entre 100 mV et 500 mV avec des incréments minimaux de 1 mV;

3) $V_3$ = la tension de sortie du deuxième canal (CH3) du programmateur, variant entre 1 V et 5 V avec des incréments minimaux de 10 mV; puisque $R_3$ = $R_F$, le gain de l'amplificateur est unitaire.

**4.** Utilisation d'une interface selon l'une quelconque des revendications 1 à 3 pour les phases de croissance et de refroidissement de monocristaux et pour la synthèse de polycristaux composites en partant des éléments du cristal.

**Patentansprüche**

**1.** Interface (2) zwischen einem programmierbaren Spannungsrampengenerator (1), der mindestens zwei Kanäle (CH2 und CH3) mit den Ausgangsspannungen $V_2$ und $V_3$, die zwischen einem Minimum und einem Maximum variiert und um minimale Werte größer 1 mV erhöht werden können, aufweist, und einem Temperaturregler (3), dadurch gekennzeichnet, daß es einen Summierverstärker ($IC_1$) mit drei Eingangsspannungen $V_1$, $V_2$, $V_3$, worin $V_2$ und $V_3$ die Ausgangsspannungen aus der Programmierein-heit (1) sind und $V_1$ eine negative Spannung, die wie nachfolgend definiert aufgeschaltet wird, ist, und einer Ausgangsspannung $V_{aus}$, mit minimalen Spannungserhöhungen von kleiner oder gleich 1 mV, umfaßt, die durch die Gleichung

$$V_{aus} = V_3 + \frac{V_2}{y} + V_1 \qquad (1)$$

definiert sind, worin y ein wie im folgenden definierter Dämpfungsfaktor ist, wobei $V_{aus}$ erhalten wird durch:

Dämpfung der minimalen Schwankung der Ausgangsspannung $V_2$ aus dem ersten Kanal (CH2) der Programmiereinheit mit einem Dämpfungsfaktor y, der gleich der oder größer als die minimale Schwankung des ersten Kanals (CH2) ist,

Zuschalten der unverändert belassenen Ausgangsspannung $V_3$ aus dem zweiten Kanal (CH3) der Programmiereinheit zur gedämpften Spannung des ersten Kanals (CH2), und Abziehen einer Spannung $V_1$, die gleich dem maximalen Ausgangswert des ersten Kanals (CH2) ist, von der gesamten Ausgangsleistung des ersten Kanals (CH2).

**2.** Interface nach Anspruch 1, dadurch gekennzeichnet, daß der Summierverstärker ($IC_1$) mit einem integrierten Schaltkreis ($\mu$A 725) erhalten wird und eine Ausgangsspannung aufweist, die durch die Gleichung

7

$$V_{aus} = \frac{V_3}{x} + \frac{V_2}{y} + \frac{V_1}{z} \qquad (2)$$

definiert ist, worin x und z die Verstärkungs- oder Dämpfungswerte von $V_3$ und $V_1$ darstellen, wobei sie auch den Wert 1 annehmen, y immer gleich der oder größer als die Minimalschwankung der Ausgangsspannung aus dem ersten Kanal (CH2) der Programmiereinheit ist und die Werte $V_1$, $V_2$, $V_3$ wie folgt definiert sind:

1) $V_1$ ist eine durch eine Zener-Diode stabilisierte negative Spannung, die notwendig ist, um ein Ausgangssignal aufrechtzuerhalten, welches das Ausgangssignal aus dem ersten Kanal (CH2) der Programmiereinheit und das spezifische Ausgangssignal des Verstärkers vollständig kompensiert; die Spannung $V_1$ kann auch um den Faktor z als Funktion des Kehrwerts zweier Widerstände $R_1$ und $R_F$ gedämpft oder verstärkt werden;

2) $V_2$ ist Ausgangsspannung, die von der Programmiereinheit auf dem ersten Kanal (CH2) geliefert wird und die zwischen einem Mindestwert und einem Maximalwert mit minimalen Erhöhungen größer 1 mV variiert werden kann, wobei die Spannung $V_2$ um den Faktor y als Funktion des Kehrwerts zweier Widerstände $R_2$ und $R_F$ und mit minimalen Erhöhungen, zwischen den äußersten gedämpften Werten des Schwankungsbereichs von $V_2$, kleiner oder gleich 1 mV gedämpft wird;

3) $V_3$ ist Ausgangsspannung des zweiten Kanals (CH3) der Programmiereinheit, die zwischen einem Minimum und einem Maximum mit minimalen Erhöhungen von größer 1 mV variiert werden kann; die Spannung $V_3$ kann auch um einen Faktor z als Funktion des Kehrwerts zweier Widerstände $R_3$ und $R_F$ gedämpft oder verstärkt werden;

wobei die Werte $V_1$ und $V_3$ in geeigneter Weise verstärkt oder gedämpft oder unverändert belassen werden und $V_2$ immer gedämpft wird, unter der Bedingung, daß x, y, z derart beschaffen sind, daß sie zu $V_{aus}$ mit minimalen Erhöhungen kleiner oder gleich 1 mV führen, wobei der Widerstand $R_F$ zwischen dem Ausgang und einem Eingang (3') des Summierverstärkers ($IC_1$) geschaltet ist und die Widerstände $R_1$, $R_2$, $R_3$ zwischen der Eingangsspannung $V_1$, $V_2$ bzw. $V_3$ und dem Eingang (3') des Summmierverstärkers ($IC_1$) geschaltet sind.

3. Interface nach Anspruch 2, dadurch gekennzeichnet, daß die Ausgangskanäle (CH2 und CH3) der Programmiereinheit (1) Spannungen $V_2$, $V_3$ mit minimalen Erhöhungen von 10 mV liefern, und daß $V_1$, $V_2$ und $V_3$ die folgenden Werte annehmen, um Ausgangsspannungen $V_{aus}$ mit Mindesterhöhungen von 1 mV zu erhalten:

1) $V_1$ = ungefähr -500 mV, stabilisiert durch eine Zener-Diode, notwendig, um ein Ausgangssignal, das ein vom ersten Kanal (CH2) der Programmiereinheit geliefertes 500 mV Signal, wie unter 2) im folgenden beschrieben, und das spezifische Ausgangssignal des Verstärkers vollständig kompensiert, aufrechtzuerhalten, wobei der Verstärkungsfaktor z des Verstärkers für diese Spannung 1 ist, da die Widerstände $R_1$ = $R_F$;

2) $V_2$, von der Programmiereinheit auf dem ersten Kanal gelieferte Ausgangsspannung, zwischen 1 V und 5 V mit minimalen Erhöhungen von 10 mV variierbar; da $R_2$ = $R_F \cdot 10$, wird diese Spannung durch den Verstärker um einen Faktor y = 10 gedämpft und trägt zu Ausgangsspannungsschwankungen von 100 mV bis 500 mV mit minimalen Erhöhungen von 1 mV bei;

3) $V_3$, Ausgangsspannung des zweiten Kanals (CH3) der Programmiereinheit, zwischen 1 V und und 5 V mit minimalen Erhöhungen von 10 mV variierbar; da $R_3$ = $R_F$, ist der Verstärkungsfaktor x gleich 1.

4. Verwendung eines Interface nach irgendeinem der Ansprüche 1 bis 3 für die Wachstums- und Abkühlphasen von Einkristallen und für die Synthese von Komposit-Polykristallen, die von den Kristallelementen ausgeht.

Fig.1.

Fig.2.